# EUROPÄISCHE PATENTSCHRIFT

(11) **EP 4 624 693 B1**
(45) Veröffentlichungstag und Bekanntmachung des Hinweises auf die Patenterteilung: **27.05.2026**
(21) Anmeldenummer: 25166878.6
(22) Anmeldetag: 28.03.2025
(51) Int. Cl.: E04D 11/00, G01F 23/00

(54) **KONTROLLSCHACHT FÜR EIN DACH MIT WASSERFÜHRENDER SCHICHT UND DACHAUFBAU MIT KONTROLLSCHACHT**
INSPECTION SHAFT FOR A ROOF WITH A WATER-CARRYING LAYER AND ROOF STRUCTURE WITH INSPECTION SHAFT
PUITS D'INSPECTION POUR TOIT AVEC COUCHE D'ÉCOULEMENT D'EAU ET STRUCTURE DE TOIT AVEC PUITS D'INSPECTION

(30) Priorität: 28.03.2024 DE 102024108979
(43) Veröffentlichungstag der Anmeldung: 01.10.2025
(73) Patentinhaber: Optigrün international AG, 72505 Krauchenwies-Göggingen (DE)
(72) Erfinder: Gößner, Dominik, 72505 Krauchenwies-Göggingen (DE)
(74) Vertreter: Maiwald GmbH

(56) Entgegenhaltungen:
- EP-A1- 1 251 218
- EP-A1- 3 202 995
- WO-A1-2014/167556

## Beschreibung

### TECHNISCHES GEBIET

Die Erfindung betrifft einen Kontrollschacht für ein Dach mit wasserführender Schicht und insbesondere für eine Dachbegrünung oder ein Verkehrsdach, in deren Dachaufbau eine wasserführende Schicht vorhanden ist, sowie einen Dachaufbau mit einem Kontrollschacht.

### HINTERGRUND DER ERFINDUNG

In jüngster Zeit werden Dachbegrünungen und Verkehrsdächer nicht mehr nur zur statischen Aufnahme und Rückhaltung von Niederschlägen eingesetzt, sondern zunehmend zum aktiven Management der Niederschläge. Dabei wird der aufgefangene Niederschlag beispielsweise computergesteuert mittels regelbarer Abflüsse und/oder steuerbarer Pumpen weiter verteilt, wobei klimatische Einflüsse berücksichtigt und vorgegebene Wasserbilanzen erzielt werden können, wie dies zum Beispiel in der EP 3202995 A1 und EP 3757300 A1 der Anmelderin beschrieben ist. Die in diesem Zusammenhang eingesetzten Dachbegrünungen weisen in der Regel einen vielschichtigen Dachbegrünungsaufbau auf, der eine wasserführende Schicht umfasst. Gleiches gilt für Verkehrsdächer, bei denen anstelle einer oberen, bepflanzten Schicht ein begeh- oder befahrbarer Belag vorhanden ist. Häufig finden sich auch Dächer, die neben bepflanzten Bereichen begeh- oder befahrbare Bereiche aufweisen. Derartige Dächer, in denen Wasser in einer wasserführenden Schicht aufgenommen werden kann, werden häufig als Retentionsdächer bezeichnet. Diese Retentionsdächer enthalten ein Traggerüst, das den Hohlraum definiert, in dem das Wasser der wasserführenden Schicht aufgenommen werden kann. Derartige Traggerüste werden häufig von einer Vielzahl nebeneinander angeordneter kistenförmiger Bauelemente gebildet, die unter der Bezeichnung Wasser-Retentionsboxen bekannt sind. Im Rahmen dieser Anmeldung ist unter einem Dachaufbau grundsätzlich jeder Schichtaufbau zu verstehen, bei dem eine der Schichten eine wasserführende Schicht ist, unabhängig davon, ob sich diese über die gesamte Dachfläche oder nur einen Teil derselben erstreckt, und unabhängig davon, wie viele und welche Arten von Schichten sich oberhalb und unterhalb der wasserführenden Schicht befinden und für welche Verwendung diese vorgesehen sind. Auch hier kann der Schichtaufbau in verschiedenen Teilbereichen der Dachfläche unterschiedlich ausgebildet sein.

In solchen komplexen Dach-Schichtaufbauten ist üblicherweise wenigstens ein Kontrollschacht vorhanden, der beispielsweise über einem Dachabfluss aufgestellt ist. Der Kontrollschacht wird meist entweder direkt auf der Dachabdichtung (dann mit Öffnungen im unteren Bereich, um den Wasserfluss nicht zu stoppen) oder oberhalb der wasserführenden Schicht aufgestellt, d. h., auf dem Traggerüst des Retentionsdaches. Der Kontrollschacht weist eine Seitenwandung auf, die den Innenraum gegenüber den an die Seitenwandung angrenzenden Schichten des Dach(begrünungs)aufbaus abgrenzt. Nach unten, zur Dachabdichtung hin ist der Kontrollschacht zumindest teilweise und meist vollständig offen. In letzterem Fall ist der Innenraum also nach unten nicht von einer Bodenplatte begrenzt, in ersterem Fall ist wenigstens eine Öffnung in der Bodenplatte vorhanden. Dagegen ist der Kontrollschacht nach oben hin mit einem abnehmbaren Deckel oder einer Klappe verschlossen, sodass der Innenraum von oben her zugänglich ist. In der Regel befindet sich unterhalb des Innenraums des Kontrollschachtes keine Wasser-Retentionsbox bzw. kein Traggerüst. Dies ermöglicht den Zugriff auf Komponenten, die im Bereich des Innenraums angeordnet sind, bis hinunter zu Dachabdichtung und Dachabflüssen. Im Bereich des Innenraums angeordnete Komponenten können somit gewartet, repariert, falls erforderlich, ausgetauscht und gegebenenfalls ausgelesen werden. Es ist zum Beispiel möglich, im Innenraum eine Verarbeitungsvorrichtung anzuordnen, welche mit wenigstens einem Sensor verbunden ist, der im Bereich des Daches angebracht ist, um für das Wassermanagement relevante Daten zu ermitteln. Bei dem Sensor handelt es sich beispielsweise um einen Temperatursensor, der die Temperatur im Bereich des Daches misst, einen Bodenfeuchtemesser, der die Bodenfeuchte im Pflanzsubstrat eines Dachbegrünungsaufbaus ermittelt, oder einen oder mehrere Wasserstandsmesser zur Ermittlung des Wasserstandes in der wasserführenden Schicht und gegebenenfalls weiteren, dem Dachaufbau zugeordneten Wasserspeichern. Die Datenübertragung von dem wenigstens einen Sensor an die Verarbeitungsvorrichtung kann entweder über Kabel oder drahtlos erfolgen. In letzterem Fall ist die Verarbeitungsvorrichtung ein Empfänger oder umfasst einen solchen, der die drahtlos übermittelten Daten in Empfang nimmt. Die Verarbeitungsvorrichtung kann auch eine Speichervorrichtung sein, in der die Sensordaten vor der weiteren Bearbeitung abgespeichert werden. Die Auswertung der von den Sensoren übermittelten Daten erfolgt entweder in der Verarbeitungsvorrichtung selbst oder, bevorzugt, in einem außerhalb des Daches aufgestellten Computer. Erfolgt die Übertragung der Daten von der Verarbeitungsvorrichtung an den Computer nicht über Kabel, sondern drahtlos, befindet sich im Innenraum des Kontrollschachtes zu diesem Zweck noch ein Sender oder die Verarbeitungsvorrichtung ist ein Sender, welcher die empfangenen Daten unmittelbar weiterleitet.

Für ein Wassermanagement, wie es beispielsweise in den beiden eingangs genannten Veröffentlichungen beschrieben ist, wird mindestens ein Wasserstandssensor benötigt, der den Wasserstand in der wasserführenden Schicht des Dachaufbaus misst. Dabei kann es sich beispielsweise um einen in der wasserführenden Schicht angeordneten Schwimmer handeln, vorzugsweise um einen solchen, der Werte elektronisch an die Speichervorrichtung übermitteln kann. Derartige Wasserstandssensoren haben sich jedoch als wartungsanfällig und teilweise ungenau erwiesen. Auch Messwerte, die von anderen elektronischen Wasserstandssensoren in der wasserführenden Schicht geliefert wurden, haben sich als nicht völlig zuverlässig herausgestellt.

Die Anmeldung EP 1 251 218 A1 offenbart einen Kontrollschacht für ein Dach mit einer wasserführenden Schicht.

Aufgabe der Erfindung ist es daher, eine Möglichkeit zu schaffen, die es erlaubt, in einem Dachaufbau mit einer wasserführenden Schicht den Wasserstand in dieser Schicht einfach und zuverlässig zu ermitteln.

### ZUSAMMENFASSUNG DER ERFINDUNG

Die Lösung dieser Aufgabe gelingt durch Bereitstellung eines Kontrollschachtes mit den Merkmalen gemäß Anspruch 1 sowie mit einem Dachaufbau, der die Merkmale des Anspruchs 11 aufweist. Dieser Dachaufbau weist einen Kontrollschacht gemäß Anspruch 1 auf. Bevorzugte Weiterbildungen des Kontrollschachtes sind in den von Anspruch 1 abhängigen Ansprüchen beschrieben.

Wie sich in den Untersuchungen der Anmelderin herausgestellt hat, ist eine Ursache für die nicht völlig ausreichende Zuverlässigkeit von Messwerten, die von Wasserstandssensoren in bisher üblicher Anordnung geliefert wurden, darin zu sehen, dass in der wasserführenden Schicht meist nur eine relativ geringe Höhe für die Anbringung eines Wasserstandssensors zur Verfügung steht. Die Höhe der wasserführenden Schicht wird dabei in der Regel von der Höhe des Traggerüsts bestimmt, welches den Hohlraum definiert, in dem das Wasser der wasserführenden Schicht aufgenommen werden kann. Die vergleichsweise geringe Höhe der wasserführenden Schicht bzw. des Traggerüsts kann beispielsweise dazu führen, dass der Wasserstandssensor dort entweder gar nicht montiert werden kann oder in einer Lage montiert wird, die für die Messung des Wasserstandes nicht ideal ist. Zum Beispiel ist es für viele Typen von Wasserstandssensoren wichtig, dass sie möglichst genau senkrecht zur Wasseroberfläche ausgerichtet werden, um genaue Messwerte liefern zu können. Dies gilt nicht nur für Wasserstandssensoren mit Schwimmer, sondern beispielsweise auch für kapazitive Wasserstandsmesser. Eine exakt senkrechte Ausrichtung ist jedoch auch wegen der schlechten Zugänglichkeit der wasserführenden Schicht oft schwierig. Im Falle von Ultraschallsensoren sollte sich zur Erzielung genauer Messwerte deren Sensorfläche möglichst exakt parallel zur Wasseroberfläche befinden. Zusätzlich zu den genannten Schwierigkeiten bei der Anbringung kommt hier hinzu, dass ein ausreichender Abstand der Sensorfläche von der Wasseroberfläche erforderlich ist, um genaue Messwerte zu erhalten. Dieser ausreichende Abstand ist in relativ niedrigen wasserführenden Schichten oft aber nicht gegeben.

In der vorliegenden Erfindung werden die genannten Schwierigkeiten dadurch umgangen, dass der Wasserstandssensor im Innenraum eines Kontrollschachtes des Dachaufbaus angebracht ist. Die Anbringung des Wasserstandssensors erfolgt dabei in einem Bereich, in dem der Innenraum nach unten offen ist und die Wasseroberfläche der wasserführenden Schicht vom Innenraum aus gesehen freiliegt. Somit können beispielsweise im Falle eines Ultraschallsensors die von der Sensorfläche ausgesandten Ultraschallwellen die Wasseroberfläche erreichen. Wasserstandssensoren, die zur Wasserstandsmessung Kontakt mit dem Wasser benötigen, können so mit einem unteren Bereich ins Wasser eintauchen, während ein oberer Bereich am Kontrollschacht befestigt ist. Für den Wasserstandssensor steht dabei zusätzlich zur Höhe der wasserführenden Schicht die gesamte Höhe des Innenraums des Kontrollschachtes zur Verfügung. Damit ist nicht nur mehr als ausreichend Freiraum vorhanden, der eine exakte Ausrichtung des Wasserstandssensors in Bezug auf die Wasseroberfläche ermöglicht, sondern es kann auch ein ausreichender Abstand des Wasserstandssensors von der Wasseroberfläche sichergestellt werden, beispielsweise um eine ausreichende Wegstrecke für die Schallwellen eines Ultraschallsensors bereitzustellen. Auf diese Weise können zuverlässige und genaue Messungen des Wasserstandes in der wasserführenden Schicht erreicht werden. Gleichzeitig ist der im Innenraum des Kontrollschachts angeordnete Wasserstandssensor sehr einfach für Wartung, Reparatur oder Austausch erreichbar. Letzterer Vorteil ergibt sich für sämtliche einsetzbaren Wasserstandssensoren, unabhängig davon, ob die Exaktheit ihrer Messergebnisse von der Genauigkeit ihrer Positionierung in Bezug auf die Wasseroberfläche der wasserführenden Schicht abhängt oder nicht. Die Erfindung eignet sich daher grundsätzlich für jegliche Typen von Wasserstandssensoren, die zur Messung des Wasserstandes in der wasserführenden Schicht eines Dachaufbaus geeignet sind.

Während sich zur Anbringung des Wasserstandssensors grundsätzlich jeder Kontrollschacht des Standes der Technik eignet, der aus seinem Innenraum heraus nach unten einen Zugang zur Wasseroberfläche ermöglicht, wird im erfindungsgemäßen Dachaufbau ein Kontrollschacht gemäß Anspruch 1 eingesetzt. Dieser weist eine Seitenwandung auf, welche einen nach unten zumindest teilweise unbegrenzten Innenraum des Kontrollschachts seitlich begrenzt. Im Innenraum des Kontrollschachts ist eine Halterung für einen Wasserstandssensor vorhanden. Erfindungsgemäß ist im Innenraum weiterhin eine Anpassungseinrichtung vorgesehen, welche dazu ausgebildet ist, die Halterung derart zu positionieren, dass der Wasserstandssensor in einer für eine Messung des Wasserstandes in der wasserführenden Schicht optimierten Position befestigt werden kann.

Der erfindungsgemäße Kontrollschacht kann grundsätzlich wie ein herkömmlicher Kontrollschacht ausgebildet sein, unterscheidet sich von letzterem aber durch das Vorhandensein der Anpassungseinrichtung für die Halterung, an der der Wasserstandssensor befestigt wird. Dies ermöglicht es auch, einen herkömmlichen Kontrollschacht durch nachträgliches Anbringen der Anpassungseinrichtung und einer Halterung für einen Wasserstandssensor nachzurüsten. Die Anpassungseinrichtung dient dem Zweck, die Halterung so auszurichten, dass der Wasserstandssensor sich in einer Position befindet, in der optimale Messergebnisse bei der Messung des Wasserstandes in der wasserführenden Schicht erzielt werden können. Insbesondere erlaubt die Anpassungseinrichtung eine Einstellung des Abstandes des Wasserstandssensors von der Wasseroberfläche und/oder der Neigung des Wasserstandssensors in Bezug auf die Wasseroberfläche der wasserführenden Schicht. Beispielsweise kann die Anpassungseinrichtung also eine Anbringung der Halterung in unterschiedlichen Positionen in Bezug auf die Höhenrichtung des Kontrollschachtes (die Richtung von der unteren Öffnung des Kontrollschachtes, benachbart zur Dachfläche, zu dessen oberer Öffnung) ermöglichen. Auf diese Weise kann zum Beispiel ein optimaler Abstand des Wasserstandssensors von der Wasseroberfläche eingestellt werden. Zusätzlich oder alternativ kann die Anpassungseinrichtung so ausgebildet sein, dass für die Halterung unterschiedliche Neigungswinkel in Bezug auf die Wasseroberfläche eingestellt werden können. Üblicherweise erfordern die handelsüblichen Wasserstandssensoren zur Erzielung optimaler Messergebnisse, wie bereits vorstehend erwähnt, entweder eine Ausrichtung mit ihrer Längserstreckungsrichtung senkrecht oder ihrer Sensorfläche parallel zur waagerechten Wasseroberfläche. Aufgrund von Unebenheiten der Dachfläche und/oder der auf dieser unterhalb der wasserführenden Schicht befindlichen Schichten steht der Kontrollschacht aber nicht immer gerade. Entsprechend verläuft die Seitenwandung nicht immer senkrecht nach oben, was wiederum dazu führt, dass die im Kontrollschacht angebrachte Halterung sich nicht exakt in der zur Positionierung des Wasserstandssensors optimalen Position befindet. Die Anpassungseinrichtung schafft hier Abhilfe, da mit ihrer Hilfe die Position der Halterung so eingestellt werden kann, dass ein an ihr befestigter Wasserstandssensor optimal zur Wasseroberfläche ausgerichtet ist.

Für diese optimale Ausrichtung des Wasserstandssensors zur Erzielung exakter Messergebnisse ist, wenn der Wasserstandssensor ein Ultraschallsensor ist, die Anpassungseinrichtung dazu ausgebildet, die Halterung so zu positionieren, dass die Sensorfläche des Ultraschallsensors im Betrieb im Wesentlichen parallel zur Wasseroberfläche der wasserführenden Schicht angeordnet ist. Ist der Wasserstandssensor ein kapazitiver Wasserstandssensor, der wenigstens eine Stabsonde umfasst, ist die Anpassungseinrichtung dazu ausgebildet, die Halterung so zu positionieren, dass die wenigstens eine Stabsonde im montierten Zustand mit ihrer Längserstreckungsrichtung im Wesentlichen senkrecht zur Wasseroberfläche der wasserführenden Schicht in der Halterung gehalten wird. "Im Wesentlichen parallel" bzw. "im Wesentlichen senkrecht" bedeutet dabei eine Abweichung von maximal ±2 °, bevorzugt maximal ±1 °, von der exakt parallelen bzw. exakt senkrechten Ausrichtung.

Konkret weist dazu die Ausgleichsvorrichtung Halterungsmittel und/oder Befestigungsmittel auf, mit denen die Halterung am Kontrollschacht in unterschiedlichen Abständen zur unteren Öffnung des Innenraums - und damit in unterschiedlichen Abständen zur Wasseroberfläche der wasserführenden Schicht - befestigt werden kann. Alternativ oder zusätzlich umfasst die Ausgleichsvorrichtung Halterungsmittel und/oder Befestigungsmittel, mit denen die Halterung in unterschiedlicher Neigung in Bezug auf die Ebene der Wasseroberfläche der wasserführenden Schicht (oder allgemein in Bezug auf eine waagerecht verlaufende Ebene) ausgerichtet werden kann. In bevorzugten Ausführungsformen der Erfindung ist die Ausgleichsvorrichtung so ausgebildet, dass sowohl die Anordnung der Halterung in unterschiedlichen Abständen zur Wasseroberfläche als auch die Einstellung der Neigung zur Wasseroberfläche möglich ist. "Halterungsmittel" bezeichnen in dieser Erfindung Mittel zum Befestigen der Halterung am Kontrollschacht, welche sich an der Halterung befinden. "Befestigungsmittel" beziehen sich dagegen auf Mittel zum Befestigen der Halterung am Kontrollschacht, die sich am Kontrollschacht befinden, und zwar hier bevorzugt an dessen Seitenwandung. Bevorzugt handelt es sich sowohl bei den Halterungsmitteln als auch den Befestigungsmitteln um solche, die eine lösbare Befestigung der Halterung am Kontrollschacht erlauben.

Die Form der Halterung, an der der Wasserstandssensor befestigt wird, ist nicht besonders beschränkt. Die Halterung muss lediglich dazu geeignet sein, den Wasserstandssensor über einer Stelle im Innenraum des Kontrollschachtes zu halten, welche einen Zugang durch eine bodenseitige Öffnung des Kontrollschachtes auf die Wasseroberfläche der wasserführenden Schicht ermöglicht. Die Halterung kann beispielsweise an einem oberen Rand des Kontrollschachtes befestigt sein oder an dessen Seitenwandung. Zum Beispiel kann die Halterung in ihrem oberen Bereich hakenförmig ausgebildet sein, sodass sie - ähnlich einem Kleiderhaken, der an einem Türblatt aufgehängt wird - über den oberen Rand des Kontrollschachtes gehängt werden kann, wobei der untere Bereich der Halterung in das Innere des Kontrollschachtes hängt. Geeignet sind beispielsweise auch jegliche Arten von Tragholmen, plattenförmigen Trägern, Tragschienen, Tragprofilen usw. Die Halterung kann lediglich einseitig am Kontrollschacht befestigt sein, während das freie Ende in den Innenraum des Kontrollschachtes hineinragt, oder an mehreren Seiten. Beispielsweise ist es möglich, die Halterung an zwei benachbarten Seiten über Eck in einem Winkel der Seitenwandung des Kontrollschachtes anzubringen. Bevorzugter ist es allerdings, die Halterung durch den gesamten Innenraum laufen zu lassen und an gegenüberliegenden Seiten der Seitenwandung zu befestigen. Da die Befestigung des Wasserstandssensors nur wenig Platz benötigt, können die übrigen Abschnitte der Halterung dann zur Befestigung weiterer Komponenten im Innenraum des Kontrollschachtes dienen. Die Halterung wird zweckmäßig so am Kontrollschacht befestigt, dass ein Trägerbereich der Halterung, d. h., derjenige Bereich, in dem der Wasserstandssensor an der Halterung befestigt wird, parallel zur Wasseroberfläche der wasserführenden Schicht verläuft (oder, anders ausgedrückt, waagerecht ausgerichtet ist). Im Falle der Ausbildung der Halterung als Tragholm, plattenförmiger Träger, Tragschiene oder Tragprofil werden diese bevorzugt insgesamt parallel zur Wasseroberfläche ausgerichtet. Dies vereinfacht die Ausrichtung des Wasserstandssensors in der gewünschten Position zur Wasseroberfläche.

Die Anbringung des Wasserstandssensors an der Halterung erfolgt auf im Stand der Technik übliche Weise. Bevorzugt wird der Wasserstandssensor durch eine Öffnung in der Halterung hindurchgeführt und anschließend fixiert. Dies kann beispielsweise durch Verklemmen erfolgen, insbesondere mithilfe eines elastischen Ringes, der mittels einer Befestigungsmutter gegen den Wasserstandssensor verpresst wird. Es ist jedoch auch eine Vielzahl anderer geeigneter Befestigungsmöglichkeiten denkbar.

In einer bevorzugten Ausführungsform der Erfindung weist die Halterung an wenigstens einer Seite und bevorzugt an zwei insbesondere gegenüberliegenden Seiten Halterungsmittel auf, mit welchen sie an der Seitenwandung des Kontrollschachtes befestigbar ist. Die Seitenwandung ihrerseits besitzt zu den Halterungsmitteln komplementäre Befestigungsmittel. Befestigungsmittel und Halterungsmittel bilden gemeinsam die Ausgleichsvorrichtung der Erfindung.

In einer Variante der Erfindung kann es sich bei den Halterungsmitteln um wenigstens eine Durchgangsöffnung handeln, die in senkrechter Richtung durch einen parallel zur Wasseroberfläche ausgerichteten Bereich der Halterung verläuft. Bevorzugt befindet sich diese wenigstens eine Durchgangsöffnung in einem Randbereich an wenigstens einer der Schmalseiten der Halterung. Bevorzugt sind pro Randbereich zwei Durchgangsöffnungen vorhanden. Die wenigstens eine Durchgangsöffnung kann ein Gewinde aufweisen. Die Halterung besteht bevorzugt aus Metall, insbesondere Edelstahl oder Stahl und besonders bevorzugt Aluminium. Gleiches gilt für die bevorzugt verwendeten Halterungs- und Befestigungsmittel, wenn es sich bei diesen nicht um Öffnungen oder Ausnehmungen in Halterung bzw. Kontrollschacht handelt. Grundsätzlich könnte es sich bei den Materialien jedoch auch um geeignete Kunststoffe handeln, was jedoch im Allgemeinen nicht bevorzugt ist. Der Kontrollschacht besteht zweckmäßig aus dem bereits im Stand der Technik verwendeten Material, wobei es sich in der Regel um ein Metall und vorzugsweise um Aluminium oder Edelstahl handeln wird.

Im Kontrollschacht ist ein zu der wenigstens einen Durchgangsöffnung komplementäres Befestigungsmittel für die Befestigung der Halterung vorhanden. Dabei kann es sich beispielsweise um einen von der Seitenwandung senkrecht nach oben vorstehenden Haltestift handeln, der in die Durchgangsöffnung eingeführt werden kann. Der Haltestift wird von einem Trägerelement in einem Abstand zur Seitenwandung an dieser gehalten. Sind in der Halterung mehrere Durchgangsöffnungen nebeneinander vorhanden, können die zugehörigen Haltestifte an einem gemeinsamen Trägerelement befestigt sein. Das Trägerelement kann auf jede geeignete Weise an der Seitenwandung des Kontrollschachtes befestigt sein und ist bevorzugt verschraubt, verschweißt oder verlötet.

Um die Halterung in verschiedenen Höhen in Bezug auf die Höhenrichtung des Kontrollschachtes - und damit in unterschiedlichen Abständen zur Wasseroberfläche der wasserführenden Schicht - befestigen zu können, sind grundsätzlich mehrere Befestigungsmöglichkeiten für die Halterung an verschiedenen Stellen in Höhenrichtung des Kontrollschachtes vorgesehen. Insbesondere sind verschiedene Befestigungsmittel in bzw. an der Seitenwandung des Kontrollschachtes vorhanden, die sich in unterschiedlichen Positionen in Bezug auf die Höhenrichtung des Kontrollschachtes und damit in unterschiedlichen Abständen zur Wasseroberfläche der wasserführenden Schicht befinden.

Im vorstehend beschriebenen Beispiel der Haltestifte sind also bevorzugt mehrere Haltestifte übereinander an der Seitenwandung des Kontrollschachtes befestigt, die es erlauben, die Halterung in unterschiedlichen Höhen und entsprechend unterschiedlichen Abständen von der Wasseroberfläche der wasserführenden Schicht anzuordnen. Weist die Halterung, wie beschrieben, in einem Randbereich zwei oder mehr nebeneinander angeordnete Durchgangsöffnungen auf, bestehen die Befestigungsmittel am Kontrollschacht aus einer entsprechenden Anzahl paralleler Reihen übereinander angeordneter Haltestifte. Diese können einzeln an der Seitenwandung befestigt sein oder paarweise oder auch insgesamt von einem gemeinsamen Trägerelement gehalten werden, welches wiederum an der Seitenwandung des Kontrollschachtes befestigt ist. Die Anordnung der Haltestifte bezüglich der Höhenrichtung des Kontrollschachtes erfolgt dabei erneut zweckmäßig so, dass die an den Haltestiften befestigte Halterung mit ihrem Trägerbereich zur Aufnahme des Wasserstandssensors waagerecht und somit im Wesentlichen parallel zur unteren Öffnungsfläche des Kontrollschachtes und parallel zur Wasseroberfläche der wasserführenden Schicht ausgerichtet ist.

In einer alternativen Ausführungsform ist wenigstens ein Haltestift an einem Trägerelement befestigt, welches wiederum über ein Befestigungselement an der Seitenwandung des Kontrollschachtes befestigt ist, das durch ein in Höhenrichtung des Kontrollschachtes verlaufendes Langloch geführt ist. Bei dem Befestigungselement kann es sich beispielsweise um einen auf der dem Haltestift gegenüberliegenden Seite des Trägerelements vorstehenden Gewindebolzen handeln. Durch Festziehen einer Gewindemutter auf dem Gewindebolzen kann das Trägerelement mit dem Haltestift an der Seitenwandung des Kontrollschachtes verschraubt werden, wobei der Abstand des Haltestifts von der unteren Öffnung des Kontrollschachtes durch Verschieben des Gewindebolzens im Langloch stufenlos eingestellt werden kann. Außerdem kann die Neigung des Haltestifts in Bezug auf die Öffnungsfläche der unteren Öffnung des Kontrollschachtes bzw. in Bezug auf die Ebene der Wasseroberfläche der wasserführenden Schicht durch Schwenken des Trägerelements eingestellt werden. Entsprechend lassen sich so der Abstand des Wasserstandssensors von der Wasseroberfläche sowie dessen Neigung zur Wasseroberfläche wie gewünscht vorgeben, wenn die Halterung auf den Haltestift aufgesetzt ist. Bevorzugt sind zwei Haltestifte nebeneinander am Trägerelement angeordnet. Möglich ist es ebenfalls, auf der von dem wenigstens einen Haltestift abgewandten Rückseite des Trägerelements zwei Gewindebolzen vorzusehen, welche entsprechend durch zwei parallel zueinander angeordnete Langlöcher in der Seitenwandung geführt und in diesen befestigt werden. Auf diese Weise kann eine sicherere Befestigung des Trägerelements an der Seitenwandung erfolgen. Eine Einstellung der Neigung ist möglich, wenn die Langlöcher eine größere Breite besitzen als der Durchmesser der Gewindebolzen. Anstelle des Gewindebolzens zur Halterung des Trägerelements kann auch eine Schraube verwendet werden, die durch ein Langloch in der Seitenwandung und durch eine Öffnung im Trägerelement hindurchgeführt ist. Die Befestigungsmittel zur Befestigung der Halterung am Kontrollschacht bestehen in dem vorstehend beschriebenen Beispiel also aus wenigstens einem Trägerelement mit wenigstens einem Haltestift, wenigstens einem Befestigungselement in Form eines Gewindebolzens mit Gewindemutter oder einer Schraube mit Mutter sowie wenigstens einem Langloch in der Seitenwandung des Kontrollschachtes.

In einer weiteren Variante erstreckt sich von der Seitenwandung des Kontrollschachtes wenigstens ein Befestigungsvorsprung mit einem zweckmäßig waagerecht verlaufenden Befestigungsbereich in den Innenraum. In einem solchen Fall ist es alternativ zur vorstehend beschriebenen Ausführungsform ebenfalls möglich, die wenigstens eine Durchgangsöffnung in der Halterung mit einer Durchgangsöffnung zu kombinieren, die in dem Befestigungsvorsprung angeordnet ist. Zweckmäßig ist der Befestigungsvorsprung gewinkelt ausgebildet, wobei ein Teil parallel zur Seitenwandung verläuft und ein weiterer Teil, nachfolgend als Befestigungsbereich bezeichnet, bevorzugt im rechten Winkel von der Seitenwandung in den Innenraum des Kontrollschachtes verläuft. In diesem Befestigungsbereich ist eine Anzahl von Durchgangsöffnungen vorhanden, welche der Anzahl der Durchgangsöffnungen in der Halterung entspricht und mit diesen zur Deckung gebracht werden kann. Sowohl die Durchgangsöffnungen in der Halterung als auch diejenigen im Befestigungsvorsprung können mit einem Gewinde versehen sein. In ein Paar zueinander komplementärer Durchgangsöffnungen kann dann eine Schraube gedreht werden, um Halterung und Befestigungsvorsprung miteinander zu verbinden. Handelt es sich bei der Schraube um eine Nivellierschraube kann ein gewünschter Abstand zwischen Halterung und Befestigung eingestellt werden, was gleichzeitig eine Feinjustage des Abstandes der Halterung von der Öffnungsfläche des Kontrollschachtes ermöglicht. Sind im Randbereich der Halterung zwei nebeneinander angeordnete Durchgangsöffnungen vorhanden und entsprechend zwei komplementäre Durchgangsöffnungen im Befestigungsvorsprung, kann durch Einstellung von Nivellierschrauben in beiden Paaren von Durchgangsöffnungen nicht nur der Abstand der Halterung vom Befestigungsvorsprung und damit von der Öffnungsfläche des Kontrollschachtes, sondern auch die Neigung der Halterung in Bezug auf diese Öffnungsfläche und entsprechend in Bezug auf die Wasseroberfläche der wasserführenden Schicht eingestellt werden. Alternativ können diese Einstellungen auch dadurch erfolgen, dass der Befestigungsvorsprung über wenigstens ein Langloch in der Seitenwandung des Kontrollschachtes befestigt wird, wie dies vorstehend für die Befestigungsmittel mit Haltestift beschrieben wurde.

Grundsätzlich ist es möglich, die Lage der Halterungsmittel und der Befestigungsmittel zu vertauschen, also die vorstehend als Halterungsmittel beschriebenen Komponenten am Kontrollschacht und insbesondere an dessen Seitenwandung vorzusehen und umgekehrt die als Befestigungsmittel beschriebenen Komponenten an der Halterung. Es wäre also prinzipiell möglich, die Haltestifte in einem Randbereich der Halterung vorzusehen, dann allerdings mit dem freien Ende des Haltestiftes nach unten angeordnet, und die zugehörigen Aufnahmeöffnungen in einem Befestigungsvorsprung, der an der Seitenwandung angebracht ist, wobei der Befestigungsvorsprung vorzugsweise in wenigstens einem Langloch in Höhenrichtung des Kontrollschachtes verschiebbar gelagert ist. Die Haltestifte müssen dabei nicht unbedingt an einem Trägerelement befestigt sein, sondern können unmittelbar über die nach unten angeordnete Seite der Halterung nach unten vorstehen.

Die Halterung stellt im Unterschied zur Seitenwandung des Kontrollschachtes allerdings weniger Anbringungsfläche zur Anbringung von Halterungsmitteln bereit. Aus diesem Grund ist es bevorzugt, Befestigungsmittel, die mehr Platz beanspruchen, im Bereich der Seitenwandung des Kontrollschachtes vorzusehen. In einer bevorzugten Variante der Erfindung befinden sich die Halterungsmittel in einem stirnseitigen Bereich der Halterung. Hier kann ausreichend Platz für die Anbringung der Halterungsmittel geschaffen werden, wenn die Halterung einen stirnseitigen Endbereich aufweist, der parallel zur Seitenwandung verläuft. Bei Befestigung der Halterung an zwei, vorzugsweise gegenüberliegenden, Seiten weisen zweckmäßig beide Seiten solche stirnseitigen Endbereiche auf. Besonders bevorzugt handelt es sich bei dem Endbereich um einen abgekanteten Bereich eines zur Befestigung des Wasserstandssensors ausgebildeten Trägerbereichs der Halterung. Diese Ausgestaltung bietet sich insbesondere bei einer streifen- oder plattenförmigen Halterung an, bei der ein Endabschnitt des streifen- oder plattenförmigen Materials in einem bevorzugt rechten Winkel umgebogen werden kann, um den stirnseitigen Endbereich zu bilden. Der stirnseitige Endbereich eignet sich bei entsprechender Auslegung dann auch zur Aufnahme mehrerer in Höhenrichtung übereinander angeordneter Halterungsmittel wie Durchgangsöffnungen oder Haltevorsprüngen oder auch eines Langlochs.

In einer bevorzugten Ausführungsform der Erfindung sind die Halterungsmittel und/oder die Befestigungsmittel so ausgebildet, dass die Halterung auf wenigstens einer der zwei Seiten und bevorzugt auf beiden Seiten in unterschiedlichen Höhen bezüglich der Höhenrichtung des Kontrollschachts befestigt werden kann. Dies bedeutet konkret, dass die Höhe der Befestigung der Halterung an der Seitenwandung des Kontrollschachtes auf beiden Seiten individuell eingestellt werden kann. Eine fixe Befestigungshöhe der Halterung auf einer Seite und eine variable Befestigungshöhe auf der anderen erlaubt dagegen keine vollkommen freie Festlegung der Befestigungshöhe, sondern lediglich eine Einstellung der Neigung der Halterung in ihrer Längserstreckungsrichtung von Halterungsmittel zu Halterungsmittel. Wie bereits erwähnt, erfolgt die Befestigung bevorzugt derart, dass die Halterung in ihrer Längsachse gegenüber der Wasseroberfläche der wasserführenden Schicht keine Neigung aufweist, sondern waagerecht und parallel zur Wasseroberfläche angeordnet ist. Der Trägerbereich der Halterung befindet sich also im Wesentlichen parallel zur Wasseroberfläche der wasserführenden Schicht. Diese Anordnung erleichtert die im Allgemeinen gewünschte Ausrichtung des Wasserstandssensors mit seiner wenigstens einen Sonde in einer Richtung senkrecht zur Wasseroberfläche ins Wasser eintauchend oder mit seiner Sensorfläche parallel zur Wasseroberfläche.

Die Erfindung ist nicht auf die Verwendung der vorstehend beschriebenen Halterungs- und Befestigungsmittel beschränkt. Insbesondere für eine Halterung mit wenigstens einem stirnseitigen Endbereich können die Halterungsmittel und die Befestigungsmittel auch ausgewählt sein aus einer der folgenden Kombinationen:
a) die Halterungsmittel sind Befestigungsöffnungen und die Befestigungsmittel Befestigungsvorsprünge,
b) die Halterungsmittel sind Befestigungsvorsprünge und die Befestigungsmittel Befestigungsöffnungen,
c) die Halterungsmittel und die Befestigungsmittel umfassen Befestigungsöffnungen, durch die hindurch ein Verbindungselement, insbesondere in Form einer Schraube, geführt ist.
Auch im Falle dieser Kombinationen können mehrere Befestigungsöffnungen oder mehrere Befestigungsvorsprünge in Höhenrichtung des Kontrollschachts übereinander angeordnet sein, wie dies bereits vorstehend beschrieben wurde. Ebenfalls ist es möglich, die Befestigungsöffnung als in Höhenrichtung des Kontrollschachts verlaufendes Langloch auszubilden. Wird als Schraube eine Nivellierschraube verwendet, kann mit ihrer Hilfe auch in diesem Fall der Abstand der Halterung von der unteren Öffnung des Kontrollschachtes bzw. der Abstand der Halterung von der Wasseroberfläche in der wasserführenden Schicht eingestellt werden. Bei Verwendung von mindestens zwei nebeneinander angeordneten Paaren von Durchgangsöffnungen und einer entsprechenden Anzahl von Nivellierschrauben ist es ebenfalls möglich, die Neigung des Trägerbereichs der Halterung quer zu ihrer Längserstreckungsrichtung einzustellen, wobei die Längserstreckungsrichtung der Richtung weg von der Seitenwandung des Kontrollschachtes entspricht.

In einer Variante der Erfindung ist die Halterung als Schiene oder Platte ausgebildet oder als Platte mit einem Trägerbereich und senkrecht dazu verlaufenden stirnseitigen Endbereichen, wobei der Trägerbereich flexibel ausgebildet ist. In letzterem Beispiel kann die Halterung ganz ohne zusätzliche Befestigungsmittel wie Bolzen oder Schrauben im Kontrollschacht befestigt werden. Dafür sind die Halterungsmittel zweckmäßig Befestigungsöffnungen und die Befestigungsmittel Befestigungsvorsprünge, oder umgekehrt die Halterungsmittel Befestigungsvorsprünge und die Befestigungsmittel Befestigungsöffnungen, wobei die Halterungsmittel in den stirnseitigen Endbereichen vorgesehen sind. Zum Einpassen der Vorsprünge in die zugehörigen Öffnungen wird die Halterung in ihrem flexiblen Trägerbereich verformt und zweckmäßig so gebogen, dass sich die freien Enden der stirnseitigen Endbereiche aufeinander zu bewegen. Dadurch verkürzt sich die Länge der Halterung in ihrer Längserstreckungsrichtung, sodass sie zwischen zwei gegenüberliegende Bereiche der Seitenwandung eingeschoben werden kann. Die Halterung wird nun so positioniert, dass sie sich in gewünschter Höhe und Orientierung im Innenraum des Kontrollschachtes befindet. Wird der Druck auf die Halterung reduziert, federn die stirnseitigen Endbereiche voneinander weg nach außen auf. Die komplementären Halterungs- und Befestigungsmittel greifen ineinander ein, sodass die Halterung mit einem in die Ausgangslage zurückgekehrten unverbogenen Trägerbereich sicher an der Seitenwandung des Kontrollschachtes gelagert ist.

### KURZE BESCHREIBUNG DER FIGUREN

Die Erfindung soll nachfolgend am Beispiel der beigefügten Zeichnungen näher erläutert werden. Die Zeichnungen sind rein schematischer Natur und nicht maßstabsgetreu. Sie dienen lediglich der Beschreibung bevorzugter Ausführungsformen der Erfindung, ohne dass diese auf die geschilderten Ausführungsformen beschränkt wäre. In den Figuren bezeichnen gleiche Bezugszeichen gleiche Gegenstände oder Teile, ohne dass jeweils alle Gegenstände oder Teile mit Bezugszeichen versehen sind.

In den Figuren zeigen:
- Fig. 1: ein Ausführungsbeispiel eines erfindungsgemäßen Kontrollschachtes in perspektivischer Ansicht;
- Fig. 2: eine Querschnittsansicht eines erfindungsgemäßen Dachaufbaus am Beispiel eines Dachbegrünungsaufbaus;
- Fig. 3: ein erstes Ausführungsbeispiel einer Kombination von Halterungsmittel und Befestigungsmittel in gesprengter Darstellung;
- Fig. 4: ein zweites Ausführungsbeispiel einer Kombination von Halterungsmittel und Befestigungsmittel in gesprengter Darstellung mit in der Halterung befestigtem Wasserstandssensor;
- Fig. 5: ein drittes Ausführungsbeispiel einer Kombination von Halterungsmittel und Befestigungsmittel in gesprengter Darstellung mit in der Halterung befestigtem Wasserstandssensor;
- Fig. 6: ein viertes Ausführungsbeispiel einer Kombination von Halterungsmittel und Befestigungsmittel in gesprengter Darstellung;
- Fig. 7: ein Ausführungsbeispiel einer Halterung mit beidseitig angeordneten Halterungsmitteln;
- Fig. 8: ein Ausführungsbeispiel eines Halterungsmittels zur Befestigung am Rand eines Kontrollschachtes in gesprengter Darstellung;
- Fig.9: ein weiteres Ausführungsbeispiel eines Halterungsmittels zur Befestigung am Rand eines Kontrollschachtes in gesprengter Darstellung.

### DETAILLIERTE BESCHREIBUNG DER ERFINDUNG

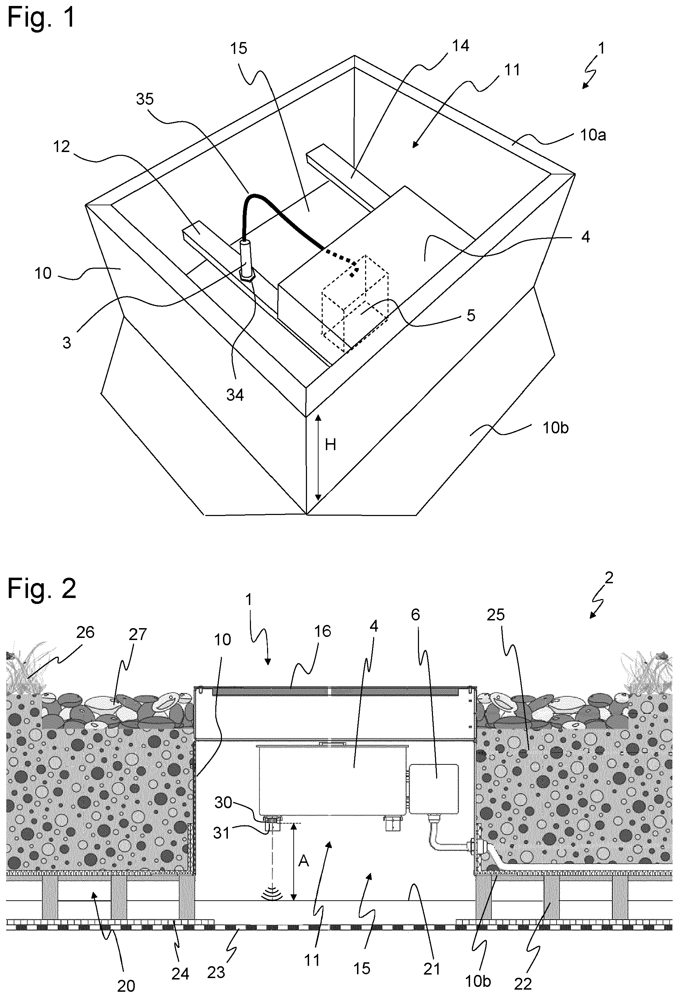

Figur 1 zeigt ein Ausführungsbeispiel eines erfindungsgemäßen Kontrollschachtes 1 in perspektivischer Ansicht auf seine Oberseite. Der Kontrollschacht wird von einer Seitenwandung 10 begrenzt, die im gezeigten Fall aus vier miteinander verbundenen und in rechtem Winkel zueinander stehenden Wandpaneelen besteht, die einen quaderförmigen Innenraum 11 seitlich begrenzen. Figur 1 gibt den Blick in den Innenraum 11 frei, da der Deckel, der auf dem oberen, rechtwinklig nach innen abgekanteten Rand 10a der Seitenwandung 10 abgelegt werden kann, um den Kontrollschacht nach oben zu verschließen, abgenommen ist. Am unteren, zur (hier nicht dargestellten) Dachfläche weisenden Rand sind vier von der Seitenwandung 10 rechtwinklig nach außen abgekantete Standflächen 10b vorhanden, um dem Kontrollschacht 1 einen sicheren Stand zu verleihen. Im Inneren der Seitenwandung 10 ist der Kontrollschacht nach unten hin vollständig offen. Die von der Seitenwandung 10 begrenzte untere Öffnungsfläche 15 ist also nirgends von einer Bodenplatte begrenzt, sodass über die gesamte Öffnungsfläche ein ungehinderter Zugriff auf die unterhalb des Innenraums 11 befindlichen Bereiche des Aufbaus des Daches möglich ist, auf dem der Kontrollschacht aufgestellt ist. Das Material der Seitenwandung 10 sowie der abgekanteten Randbereiche 10a und Standflächen 10b besteht zweckmäßig aus Aluminium- oder Edelstahlblech.

Im Innenraum 11 des Kontrollschachtes 1 sind zwei Tragholme 14 befestigt. Beide Tragholme verlaufen über die gesamte Breite des Innenraumes 11 und sind an zwei gegenüberliegenden Innenseiten der Seitenwandung 10 befestigt. Die Tragholme sind dabei so angebracht, dass sie in gleichem Abstand von der unteren Öffnungsfläche 15 an der Seitenwandung 10 befestigt sind und parallel zur unteren Öffnungsfläche verlaufen. Einer der beiden Tragholme 14 dient als Halterung 12 für einen Wasserstandssensor 3. Zu dessen Befestigung ist durch die Halterung 12/den Tragholm 14 eine Durchgangsbohrung in einer Richtung senkrecht zur unteren Öffnungsfläche 15 geführt. Durch diese Durchgangsbohrung ist ein unterer Bereich eines Wasserstandssensors 3 hindurchgeführt, der in Figur 1 von der Halterung 12 verdeckt ist. Der Wasserstandssensor 3 ist so an der Halterung 12 befestigt, dass die zur Messung des Wasserstandes in der wasserführenden Schicht des Dachaufbaus relevanten Teile des Sensors sich in für die Messung optimaler Position befinden. Dabei kann es sich zum Beispiel um die Sensorfläche eines Ultraschallsensors handeln, die so angebracht wird, dass vom Sensor ausgesandte Ultraschallwellen die Wasseroberfläche erreichen können. Im Falle eines kapazitiven Wasserstandssensors wird dieser so befestigt, dass dessen wenigstens eine Stabsonde ausreichend tief in die wasserführende Schicht hineinragt. Gleiches gilt für den Schwimmerbereich eines Wasserstandssensors mit Schwimmkörper. Nachdem der Wasserstandssensor 3 in eine geeignete Position in der Durchgangsbohrung der Halterung 12 gebracht worden ist, wird er in dieser Position fixiert. Im gezeigten Beispiel geschieht dies durch Festziehen einer Befestigungsmutter 34, die mit einem Außengewindebereich in einem Innengewinde der Durchgangsbohrung geführt ist. Durch das Festziehen der Befestigungsmutter 34 kann Druck auf einen in der Figur nicht sichtbaren Elastomerring ausgeübt werden, der in einer die Durchgangsbohrung umgebenden Ringnut liegt. Der Elastomerring wird dabei abgeplattet und nach innen in die Durchgangsbohrung und gegen das Gehäuse des Wasserstandssensors 3 gepresst.

Der Wasserstandssensor 3 wird so an der Halterung 12 fixiert, dass seine Längserstreckungsrichtung möglichst exakt senkrecht zur oberen, in der Figur sichtbaren Oberfläche der Halterung 12 und parallel zur Höhenrichtung H des Kontrollschachtes 1 ausgerichtet ist. Da die Tragholme 14 (die Halterung 12) waagerecht und parallel zur unteren Öffnungsfläche 15 und die Höhenrichtung H senkrecht dazu verlaufen, verläuft die Längserstreckungsrichtung des Wasserstandssensors 3, wenn dieser im Dachaufbau angeordnet ist, im Wesentlichen senkrecht zur Wasseroberfläche der wasserführenden Schicht und weicht nicht mehr als 2 °, bevorzugt höchstens 1 °, von der Senkrechten ab. Außerdem ist ein ausreichender Abstand von der Wasseroberfläche gewährleistet. Entsprechend sind die für die Messung des Wasserstandes relevanten Teile des Wasserstandssensors 3 in einer für die Messung günstigen Position angeordnet.

Die vom Wasserstandssensor 3 ermittelten Messwerte werden über ein Verbindungskabel 35 an eine Verarbeitungsvorrichtung 5 übermittelt, welche in einem Gerätekasten 4 angeordnet ist, der auf den beiden Tragholmen 14 befestigt ist. Bei der Verarbeitungsvorrichtung 5 kann sich um einen Sender, beispielsweise in Form eines Mobiltelefons, handeln, der die Messwerte an einen Empfänger weiterleitet, der bevorzugt außerhalb des Dachaufbaus aufgestellt ist. Alternativ kann die Verarbeitungsvorrichtung 5 die Messwerte vor Ort verarbeiten und die erhaltenen Ergebnisse dann an eine Steuervorrichtung übermitteln, in der die Ergebnisse bei der Steuerung des Wasserhaushalts des Dachaufbaus verwendet werden. Die Steuervorrichtung kann sich im Bereich des Daches befinden, beispielsweise im Gerätekasten 4, gegebenenfalls in die Verarbeitungsvorrichtung 5 integriert, befindet sich jedoch bevorzugt ebenfalls außerhalb des Dachaufbaus. Die Weitergabe der Ergebnisse an eine externe Steuervorrichtung erfolgt in an sich bekannter Weise entweder kabelgebunden oder, bevorzugt, drahtlos, insbesondere per Mobilfunk. Für den Empfang externer Steuerbefehle an Steuerkomponenten im Bereich des Dachaufbaus, welche beispielsweise auch den Betrieb des Wasserstandssensors 3 steuern, ist im Kontrollschacht 1 und insbesondere im Gerätekasten 4 zweckmäßig noch ein Empfänger vorhanden, der hier zur Vereinfachung jedoch nicht gezeigt ist. Abgesehen von der Anordnung des Wasserstandssensors entspricht dies weitgehend dem Stand der Technik.

Figur 2 zeigt einen möglichen erfindungsgemäßen Dachaufbau 2 am Beispiel eines Dachbegrünungsaufbaus. Die Schnittansicht entspricht hinsichtlich der Ansicht auf den Kontrollschacht 1 in etwa einem Schnitt durch das rechte vordere Wandpaneel der Seitenwandung 10 in Figur 1 und gibt den Blick in den Innenraum 11 des Kontrollschachtes 1 frei. Der Kontrollschacht 1 ist nun in einen mehrschichtigen Dachbegrünungsaufbau 2 integriert. Er ist so aufgestellt, dass er mit den Standflächen 10b auf der Oberseite von Wasser-Retentionsboxen aufliegt, welche das Traggerüst 22 einer wasserführenden Schicht 20 des Dachbegrünungsaufbaus 2 bilden. Die Wasser-Retentionsboxen des Traggerüsts 22 sind auf einer Schutzschicht 24 aufgestellt, welche wiederum auf diejenigen Bereiche der Dachabdichtung 23 aufgelegt ist, in denen das Traggerüst 22 aufgestellt ist. Im Bereich unterhalb der unteren Öffnungsfläche 15, welche den zur Dachabdichtung 23 weisenden unteren Abschluss des Innenraumes 11 des Kontrollschachtes 1 bildet, ist in der wasserführenden Schicht 20 kein Traggerüst vorhanden. Dies ermöglicht aus dem Innenraum 11 des Kontrollschachtes 1 einen ungehinderten Zugriff auf die Wasseroberfläche 21 der wasserführenden Schicht 20. Oberhalb des Traggerüstes 22 ist auf einer hier nicht näher beschrifteten Vliesschicht Pflanzsubstrat 25 angeordnet, dessen Oberfläche mit Pflanzen 26 bepflanzt ist. Um den Kontrollschacht 1 herum ist eine Kiesschüttung 27 vorhanden. Der in Figur 2 gezeigte Schichtaufbau entspricht grundsätzlich dem, was aus dem Stand der Technik bekannt ist, und muss daher hier nicht weiter beschrieben werden.

Im Innenraum 11 des Kontrollschachtes 1 ist, wie schon in Zusammenhang mit Figur 1 beschrieben, ein Wasserstandssensor angeordnet. Die Art der Befestigung entspricht dem, was in Figur 1 gezeigt ist und vorstehend beschrieben wurde. Konkret handelt es sich im nun beschriebenen Beispiel bei dem Wasserstandssensor um einen Ultraschallsensor 30. Er ist so an der Halterung befestigt, dass seine Sensorfläche 31 sich waagerecht und somit parallel zur Wasseroberfläche 21 befindet. Bei der Sensorfläche 31 handelt es sich um eine üblicherweise kreisförmige Fläche, durch die hindurch Ultraschallwellen aus dem Sensor 30 nach außen austreten. Die waagerechte Ausrichtung der Sensorfläche 31 führt dazu, dass die Ultraschallwellen sich in einer Richtung senkrecht zur Wasseroberfläche 21 von der Sensorfläche weg ausbreiten, wie in Figur 2 angedeutet. Durch die Anbringung des Ultraschallsensors 30 im Innenraum 11 des Kontrollschachtes 1 kann zudem gewährleistet werden, dass die Sensorfläche 31 einen ausreichenden Abstand A von der Wasseroberfläche 21 aufweist. Damit sind optimale Bedingungen vorhanden, um zuverlässige Messergebnisse in Bezug auf den Wasserstand in der wasserführenden Schicht 20 zu erhalten. Als Folge davon kann die Steuerung des Wasserhaushalts im Dachbegrünungsaufbau und in gegebenenfalls mit diesem verbundenen Wasserspeichern mit hoher Genauigkeit erfolgen.

Außerdem erlaubt die Anordnung des Wasserstandssensors im Kontrollschacht eine vereinfachte Anbringung und anschließende Wartung und Reparatur, da der Zugriff auf das Innere des Kontrollschachtes erheblich einfacher ist als auf die wasserführende Schicht 20, die zudem oft nicht die erforderliche Höhe aufweist, um den Sensor überhaupt oder in der gewünschten Position anbringen zu können. Um den Zugriff auf den Innenraum 11 des Kontrollschachtes 1 zu ermöglichen, kann der die obere Öffnung des Kontrollschachtes verschließende Deckel 16 geöffnet und optional abgenommen werden. Damit eröffnet sich der Zugriff nicht nur auf den Wasserstandssensor 30, sondern auch auf die weiteren im Innenraum 11 angeordneten Komponenten, von denen in der Figur zur Vereinfachung lediglich ein Gerätekasten 4 (ohne die darin angeordneten Geräte) sowie eine Stromversorgung 6 gezeigt sind.

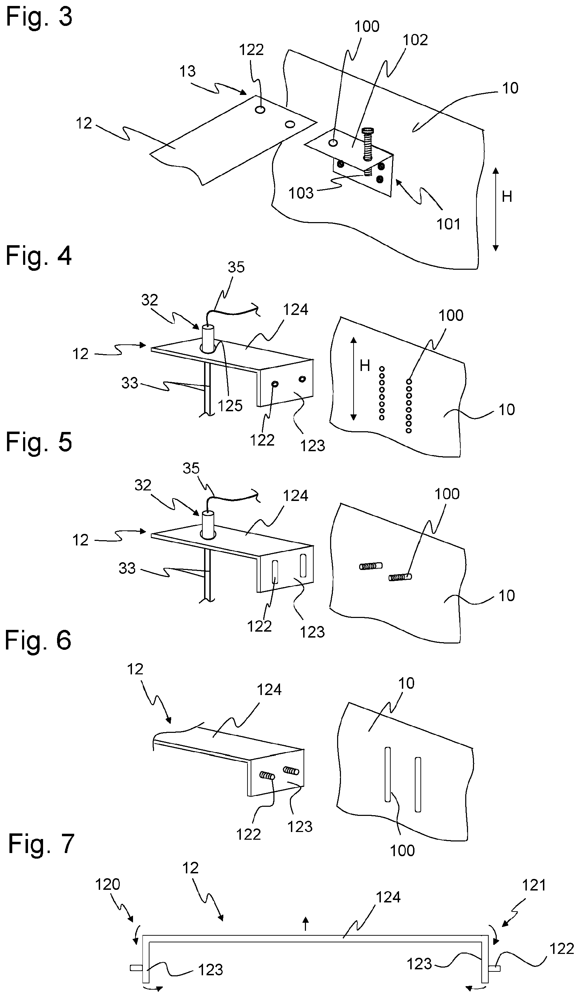

Figuren 3 bis 7 zeigen verschiedene Beispiele von Halterungsmitteln und Befestigungsmitteln, wie sie als Anpassungseinrichtung zur Anbringung einer Halterung für einen Wasserstandssensor im Kontrollschacht eingesetzt werden können.

Im Einzelnen zeigt Figur 3 eine teilweise Ansicht einer Halterung 12, welche hier aus einem plattenförmigen Bauteil in Form eines rechteckigen Metallstreifens besteht, in dessen schmalseitigem Randabschnitt zwei nebeneinander angeordnete Durchgangsbohrungen als Halterungsmittel 122 vorhanden sind. Die Halterung kann dabei so ausgebildet sein, dass sie sich über die gesamte Breite des Innenraums 11 erstreckt (wie die Tragholme 14 in Figur 1). In diesem Fall ist der zweite schmalseitige Randabschnitt zweckmäßig in gleicher Weise ausgebildet wie der in Figur 3 gezeigte. Alternativ kann die Halterung auch kürzer als die Breite des Innenraums 11 ausgebildet sein, sodass ein freies Ende der Halterung 12 im Innenraum 11 endet und nicht am Kontrollschacht befestigt ist. Die Befestigungsmöglichkeit für den Wasserstandssensor ist hier nicht zu sehen, da sie in einem nicht gezeigten Bereich der Halterung 12 liegt.

Zur Befestigung der Halterung 12 an der Seitenwandung 10 des Kontrollschachtes ist ein Befestigungsvorsprung 101 vorgesehen, der im Wesentlichen aus einem L-förmig gebogenen Metallblech, vorzugsweise Aluminium- oder Edelstahlblech, besteht. Einer der Schenkel ist mit der Seitenwandung 10 verbunden, beispielsweise verschraubt, vernietet, verlötet oder verschweißt. Der zweite Schenkel bildet einen Befestigungsbereich 102, der senkrecht von der Seitenwandung 10 in den Innenraum 11 vorspringt und zur, hier nicht gezeigten, unteren Öffnungsfläche des Kontrollschachtes parallel und insgesamt waagerecht verläuft. Durch den Befestigungsbereich 102 hindurch verlaufen zwei Durchgangsöffnungen als Befestigungsmittel 100, die mit den Durchgangsbohrungen 122 überlagert werden können, wenn die Halterung 12 mit ihrem Randabschnitt auf den Befestigungsbereich 102 aufgelegt wird. Zum Fixieren der Halterung 12 am Befestigungsvorsprung 101 dienen im gezeigten Beispiel Schrauben 103, von denen hier lediglich eine vereinfacht dargestellt ist. Jede Schraube 103 wird dann nicht nur durch die Durchgangsöffnung im Befestigungsvorsprung 102, sondern durch ein Paar überlagerter Öffnungen 122 und 100 hindurchgeführt. In einer Variante wird eine Schraubmutter auf das Ende der Schraube 103 aufgesetzt und festgezogen, um die Halterung 12 am Befestigungsvorsprung 101 zu befestigen. Alternativ können die Öffnungen mit einem Gewinde versehen sein, in das die Schraube 103 eingedreht werden kann. Eine Schraubmutter ist in diesem Fall dann nicht mehr erforderlich. Im gezeigten Beispiel bilden die Durchgangsbohrungen 122 als Halterungsmittel, der Befestigungsvorsprung 101 mit den Befestigungsmitteln 100 sowie die Schrauben 103 und gegebenenfalls Schraubmuttern gemeinsam eine Anpassungseinrichtung 13, mit welcher die Halterung 12 so positioniert werden kann, dass sich ein Wasserstandssensor in einer optimierten Position für die Messung des Wasserstandes in der wasserführenden Schicht eines Dachaufbaus befestigen lässt.

In einer Weiterbildung der Erfindung kann anstelle einer einfachen Schraube eine Nivellierschraube verwendet werden. Diese ermöglicht es, die Halterung 12 unter Einhaltung eines einstellbaren Abstandes zum Befestigungsbereich 102 am Befestigungsvorsprung 101 zu befestigen. Werden die Nivellierschrauben in den zueinander benachbarten Öffnungspaaren auf unterschiedliche Abstände zwischen Halterung 12 und Befestigungsbereich 102 eingestellt, kann auf diese Weise eine Neigung der Halterung in Bezug auf deren Querrichtung (parallel zum Verlauf der Schmalseite) eingestellt werden. Damit liegt dann entweder die in Figur 3 linke Längskante näher am Befestigungsbereich 102 als die rechte Längskante oder umgekehrt. Auf diese Weise kann eine nicht vollkommen waagerechte Aufstellung des Kontrollschachtes auf der Dachfläche bzw. auf dem Traggerüst der wasserführenden Schicht ausgeglichen werden. Gleiches gilt in Bezug auf eine Neigung der Halterung 12 bezüglich ihrer Längserstreckungsrichtung. Ist die Halterung 12 beidseitig mit einer Anpassungseinrichtung 13 versehen, wie sie in Figur 3 gezeigt ist, können die Nivellierschrauben in den Anpassungseinrichtungen auf beiden Seiten der Halterung 12 auf unterschiedliche Höhen in Bezug auf die Höhenrichtung H des Kontrollschachtes eingestellt werden. Dies ermöglicht es, die Halterung 12 so an der Seitenwandung 10 des Kontrollschachtes zu befestigen, dass sie weder in Quer- noch in Längsrichtung geneigt und somit insgesamt vollkommen waagerecht positioniert ist. Dies kann leicht mithilfe einer Wasserwaage kontrolliert werden.

Figur 4 zeigt eine alternative Ausführungsform einer Halterung 12 sowie eine alternative Anpassungseinrichtung zur Befestigung der Halterung 12 an der Seitenwandung 10 in einer optimierten Position. Die Halterung 12 ist ein im Wesentlichen L-förmiges Bauteil mit einem ebenen, rechteckigen Trägerbereich 124 und einem rechteckigen Endbereich 123, der gegenüber dem Trägerbereich rechtwinklig abgewinkelt ist. Der Trägerbereich 124 weist eine geringere Länge als die Breite des Innenraumes 11 des Kontrollschachtes 1 auf, sodass der Trägerbereich 124 im Innenraum 11 endet. Figur 4 zeigt die Halterung 12 bereits mit einem Wasserstandssensor 32 durch eine Durchgangsöffnung 125 im Trägerbereich 124 hindurchgeführt (ähnlich wie in Figur 1 gezeigt). In der Praxis wird der Wasserstandssensor allerdings erst montiert werden, nachdem die Halterung 12 an der Seitenwandung 10 befestigt ist. Im Beispiel der Figur 4 handelt es sich bei dem Wasserstandssensor um eine kapazitiven Wasserstandssensor, an dessen unterem Ende zwei Stabsonden 33 vorhanden sind, die im montierten Zustand bis zum Boden der wasserführenden Schicht 20 hinunterreichen, um den Wasserstand über die gesamte Höhe der wasserführenden Schicht messen zu können.

Die Anpassungseinrichtung zur genauen Positionierung der Halterung am Kontrollschacht umfasst im gezeigten Beispiel zwei Durchgangsöffnungen 122 als Halterungsmittel im Endbereich 123 der Halterung 12. Zu diesen Halterungsmitteln sind in der Seitenwandung 10 des Kontrollschachtes zwei Reihen übereinander angeordneter Durchgangsöffnungen als Befestigungsmittel 100 vorhanden. Die Durchgangsöffnungen jeder Reihe verlaufen in Höhenrichtung H des Kontrollschachtes in geringen Abständen von wenigen Millimetern zueinander. Die beiden Durchgangsöffnungen 122 im Endbereich 123 der Halterung 12 werden zur Befestigung der Halterung mit zwei ausgewählten Durchgangsöffnungen 100 in der Seitenwandung 10 zur Deckung gebracht. Die Befestigung der Halterung erfolgt mittels Schrauben, welche durch die beiden Paare überlagerter Öffnungen hindurchgeführt und mit einer Schraubmutter auf der Außenseite der Seitenwandung 10 verschraubt werden. Alternativ können alle Öffnungen Gewinde aufweisen, sodass eine Befestigung allein durch Eindrehen von Schrauben möglich ist. Durch entsprechende Auswahl der Durchgangsöffnungen in der Seitenwandung 10 kann der Abstand der Halterung 12 von der unteren Öffnungsfläche 15 des Kontrollschachtes 1 und entsprechend von der wasserführenden Schicht des Dachaufbaus eingestellt werden.

Figur 5 zeigt eine alternative Ausführungsform der Anpassungseinrichtung. Die Halterung 12 entspricht im Wesentlichen derjenigen der Figur 4 und unterscheidet sich von dieser lediglich durch die Form der Durchgangsöffnungen 122. Im Beispiel der Figur 5 sind diese als Langlöcher ausgebildet, die sich in Höhenrichtung H (senkrecht zur unteren Öffnungsfläche 15 des Kontrollschachtes und senkrecht zur Wasseroberfläche der wasserführenden Schicht 21) erstrecken. Als Befestigungsmittel 100 sind an der Seitenwandung 10 zwei Gewindebolzen angebracht, die sich senkrecht von der Seitenwandung weg in den Innenraum des Kontrollschachtes erstrecken. Die Halterung 12 wird so gegen die Seitenwandung 10 geschoben, dass die Gewindebolzen 100 durch die Langlöcher 122 hindurchreichen und an den überstehenden Enden auf der Rückseite des Endbereichs 123 mittels nicht dargestellter Schraubmuttern verschraubt werden können. Dabei kann der Abstand des Trägerbereichs 124 von der unteren Öffnungsfläche 15 des Kontrollschachtes durch Verschieben der Gewindebolzen in den Langlöchern 122 entlang der Höhenrichtung H des Kontrollschachtes eingestellt werden. Ist die Breite der Langlöcher größer als der Durchmesser der Gewindebolzen ist ein Verkippen der Halterung in Querrichtung in einem gewissen Umfang möglich, der in der Regel ausreicht, um eine nicht vollständig waagerechte Aufstellung des Kontrollschachtes auszugleichen und für eine waagerechte Anordnung des Trägerbereichs 124 zu sorgen. Anstelle der Gewindebolzen können in der Seitenwandung 10 auch zwei Durchgangsöffnungen vorhanden sein. Die Befestigung der Halterung 12 an der Seitenwandung 10 erfolgt dann mittels zweier Schrauben, die sowohl durch die Durchgangsöffnungen als auch die Langlöcher gesteckt und mittels Schraubmuttern verschraubt werden.

Figur 6 zeigt eine weitere Variante der Anpassungseinrichtung. Sie unterscheidet sich von derjenigen der Figur 5 im Wesentlichen dadurch, dass die Anordnung der Gewindebolzen und Langlöcher vertauscht ist. Die Gewindebolzen befinden sich nun als Halterungsmittel 122 am stirnseitigen Endbereich 123 der Halterung 12, während sich die Langlöcher als Befestigungsmittel 100 in Höhenrichtung H durch die Seitenwandung 10 erstrecken. Die Befestigung der Halterung 12 erfolgt in analoger Weise zu dem Beispiel gemäß Figur 5. Auch in diesem Fall können die Gewindebolzen durch Durchgangsöffnungen im Endbereich 123 ersetzt werden, und die Befestigung der Halterung 12 an der Seitenwandung 10 kann dann erneut mittels Schrauben erfolgen.

Figur 7 zeigt eine Seitenansicht eines weiteren Ausführungsbeispiels einer Halterung 12, wie sie in der vorliegenden Erfindung eingesetzt werden kann. Die Seitenansicht zeigt einen Blick auf eine Längsseite der Halterung. Der Trägerbereich 124, der im Wesentlichen die Form einer streifenförmigen Platte aufweist, besitzt an beiden Schmalseiten sich rechtwinklig vom Trägerbereich nach unten weg erstreckende rechteckige Endbereich 123, welche beispielsweise durch Abkanten von Randabschnitten aus dem Trägerbereich gebildet worden sind. Von den Endbereichen 123 erstrecken sich jeweils zwei Haltestifte als Halterungsmittel 122, wobei der hintere der Haltestifte jeweils vom vorderen verdeckt ist. Die Haltestifte sind dazu ausgebildet, in Durchgangsöffnungen einzugreifen, welche die Befestigungsmittel 100 in der Seitenwandung 10 bilden, zum Beispiel wie in Figur 4 auf der rechten Seite gezeigt. Zum Befestigen der Halterung 12 an der Seitenwandung 10 werden im Beispiel der Figur 7 keine weiteren Befestigungsmittel benötigt. Vielmehr können die Haltestifte 122 in die Befestigungsmittel 100 der Seitenwandung 10 eingeschnappt werden. Dies ist möglich, weil der Trägerbereich 124 der Halterung 12 flexibel ausgebildet ist. Der Trägerbereich 124 hat eine Länge, welche der Breite des Innenraumes 11 des Kontrollschachtes 1 im Wesentlichen entspricht. Wird die Halterung, wie mit den Richtungspfeilen in Figur 7 angedeutet, verformt, verkürzt sich die Gesamtlänge der Halterung 12 dadurch, dass die Endbereiche 123 mit ihren freien Enden aufeinander zu bewegt und ein mittlerer Abschnitt des Trägerbereichs 124 nach oben aufgewölbt wird. Dadurch lässt sich die Halterung 12 zwischen den beiden gegenüberliegenden Seitenwandbereichen, in denen sich die Befestigungsmittel 100 befinden, so positionieren, dass die Haltestifte 122 vor den ausgewählten Öffnungen 100 in der Seitenwandung 10 zu liegen kommen. Reduziert man nun den Druck auf die Endbereiche 123 der Halterung, federn diese nach außen auf, und die Haltestifte 122 schieben sich in die zugehörigen Öffnungen 100. Der Trägerbereich 124 streckt sich und nimmt wieder seine unverformte, ebene Form ein.

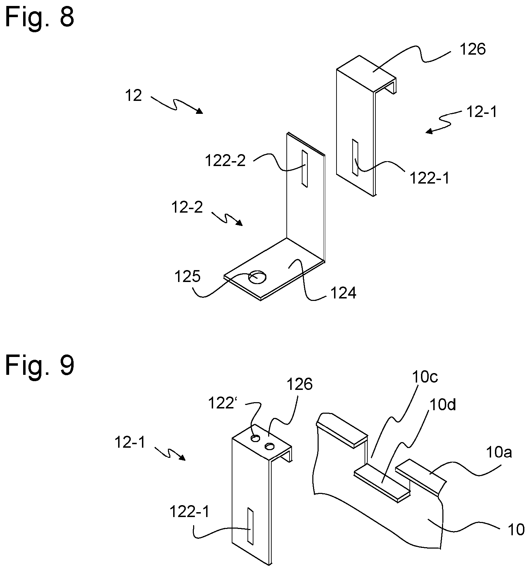

Figur 8 zeigt eine alternative Befestigungsmöglichkeit der Halterung am Kontrollschacht. Die Halterung 12 wird hier nicht an der Seitenwandung des Kontrollschachtes, sondern an dessen Rand befestigt. Im gezeigten Beispiel besteht die Halterung 12 aus zwei Teilen 12-1 und 12-2, die hier voneinander getrennt dargestellt sind. Zur Verwendung werden die beiden Teile jedoch mit einem hier nicht gezeigten Verbindungselement, beispielsweise einer Schraube mit Mutter, welches durch die übereinandergelegten Öffnungen 122-1 und 122-2 geführt ist, miteinander verbunden. Dabei können durch Verschieben der Teile 12-1 und 12-2 nicht nur die Höhe des Trägerbereichs 124 und der darin befindlichen Durchgangsöffnung 125 zur Aufnahme des Wasserstandssensors, sondern auch die Neigung des Trägerbereichs 124 eingestellt werden, wie bereits mehrfach beschrieben. Der obere Teil 122-1 wird über den Rand des Kontrollschachtes gehängt. Dazu ist ein oberer Bereich des Teils 122-1 U-förmig umgebogen und bildet einen Aufhängebereich 126. Dieser kann auf den abgekanteten Randbereich 10a (vergleiche Figur 1) aufgelegt werden.

Figur 9 zeigt eine alternative Art der Aufhängung einer Halterung 12, von der hier nur der obere Teil 12-1 dargestellt ist, am Rand 10a eines Kontrollschachtes. Am oberen Rand des Kontrollschachtes ist eine Vertiefung 10c vorhanden, an deren oberem Rand ein Streifen 10d der Seitenwandung 10 des Kontrollschachtes nach innen umgebogen ist und parallel zum abgekanteten Rand 10a, jedoch tiefer als dieser, verläuft. Der Halterungsteil 12-1 passt von seiner Breite genau in die Vertiefung 10c hinein und kann mit dem Aufhängebereich 126 auf den Randbereich 10d aufgelegt werden. Im Aufhängebereich 126 sind zwei mit einem Gewinde versehene Bohrungen 122' vorhanden. In diese können zwei Schrauben eingedreht werden. Abhängig davon, wie weit die Schrauben in die Bohrungen 122' eingeschraubt werden, lässt sich eine Feineinstellung von Höhe und Neigung der Halterung 12 vornehmen.

### BEZUGSZEICHENLISTE

- 1: Kontrollschacht
- 10: Seitenwandung
- 10a: Abgekanteter Randbereich
- 10b: Standfläche
- 100: Befestigungsmittel
- 101: Befestigungsvorsprung
- 102: Befestigungsbereich
- 103: Schraube
- 11: Innenraum
- 12: Halterung
- 120: Erste Seite der Halterung 12
- 121: Zweite Seite der Halterung 12
- 122: Halterungsmittel/Bohrung
- 123: Endbereich
- 124: Trägerbereich
- 125: Halteöffnung
- 126: Aufhängbereich
- 13: Anpassungseinrichtung
- 14: Tragholm
- 15: Offener Bodenbereich
- 16: Deckel
- 2: Dach(begrünungs)aufbau
- 20: wasserführende Schicht
- 21: Wasseroberfläche
- 22: Traggerüst
- 23: Dachabdichtung
- 24: Schutzschicht
- 25: Pflanzsubstrat
- 26: Bepflanzung
- 27: Kiesschüttung
- 3: Wasserstandssensor
- 30: Ultraschallsensor
- 31: Sensorfläche
- 32: kapazitiver Wasserstandssensor
- 33: Stabsonde
- 34: Befestigungsmutter
- 35: Verbindungskabel
- 4: Gerätekasten
- 5: Speichereinheit/Sender/Empfänger
- 6: Stromversorgung
- A: Abstand 3 auf 21
- H: Höhenrichtung von 1

## Patentansprüche

1. Kontrollschacht (1) für einen Dachaufbau (2) mit einer wasserführenden Schicht (20), umfassend
eine Seitenwandung (10), welche einen nach unten zumindest teilweise unbegrenzten Innenraum (11) des Kontrollschachts (1) seitlich begrenzt, **dadurch gekennzeichnet, dass**
der Kontrollschacht weiterhin eine im Innenraum (11) angeordnete Halterung (12) für einen Wasserstandssensor und eine Anpassungseinrichtung (3) umfasst, wobei die Anpassungseinrichtung (3) dazu ausgebildet ist, die Halterung (12) derart zu positionieren, dass der Wasserstandssensor (3) in einer für eine Messung des Wasserstandes in der wasserführenden Schicht (20) optimierten Position befestigbar ist.

2. Kontrollschacht nach Anspruch 1,
worin der Wasserstandssensor (3) ein Ultraschallsensor (30) ist und die Anpassungseinrichtung (13) dazu ausgebildet ist, die Halterung (12) so zu positionieren, dass die Sensorfläche (31) des Ultraschallsensors (30) im Betrieb im Wesentlichen parallel zur Wasseroberfläche (21) der wasserführenden Schicht (20) angeordnet ist.

3. Kontrollschacht nach Anspruch 1,
worin der Wasserstandssensor (3) ein kapazitiver Wasserstandssensor (32) mit wenigstens einer Stabsonde (33) ist und die Anpassungseinrichtung (13) dazu ausgebildet ist, die Halterung (12) so zu positionieren, dass die wenigstens eine Stabsonde (33) im montierten Zustand mit ihrer Längserstreckungsrichtung im Wesentlichen senkrecht zur Wasseroberfläche (21) der wasserführenden Schicht (20) von der Halterung (12) gehalten wird.

4. Kontrollschacht nach einem der Ansprüche 1 bis 3,
worin die Halterung (12) dazu ausgebildet ist, an einem oberen Rand (10a) oder der Seitenwandung (10) des Kontrollschachtes (1) befestigt zu werden.

5. Kontrollschacht nach Anspruch 4,
worin die Halterung (12) an wenigstens einer Seite (120) und bevorzugt an zwei insbesondere gegenüberliegenden Seiten (120, 121) Halterungsmittel (122) aufweist, mit welchen die Halterung (12) an der Seitenwandung (10) befestigbar ist, und die Seitenwandung (10) zu den Halterungsmitteln (122) komplementäre Befestigungsmittel (100) aufweist, wobei die Halterung (12) optional an wenigstens einer Seite und bevorzugt zwei gegenüberliegenden Seiten (120, 121) einen parallel zur Seitenwandung (10) verlaufenden Endbereich (123) aufweist, wobei der Endbereich (123) bevorzugt ein abgekanteter Bereich eines zur Befestigung des Wasserstandssensors (3) ausgebildeten Trägerbereichs (124) der Halterung (12) ist.

6. Kontrollschacht nach Anspruch 4,
worin sich von der Seitenwandung (10) wenigstens ein Befestigungsvorsprung (101) mit einem waagerecht verlaufenden Befestigungsbereich (102) in den Innenraum (11) erstreckt.

7. Kontrollschacht nach einem der Ansprüche 4 bis 6,
worin die Halterungsmittel (122) und/oder die Befestigungsmittel (100) so ausgebildet sind, dass die Halterung (12) auf wenigstens einer der zwei Seiten (120, 121) und bevorzugt auf beiden Seiten (120, 121) in unterschiedlichen Höhen bezüglich der Höhenrichtung des Kontrollschachts (1) befestigt werden kann, wobei die Befestigung bevorzugt derart erfolgen kann, dass der Trägerbereich (124) der Halterung (12) im Wesentlichen parallel zur Wasseroberfläche (21) der wasserführenden Schicht (20) ausgerichtet ist.

8. Kontrollschacht nach einem der Ansprüche 4 bis 7,
worin die Halterungsmittel (122) und die Befestigungsmittel (100) ausgewählt sind aus einer der folgenden Kombinationen:
a) die Halterungsmittel (122) sind Befestigungsöffnungen und die Befestigungsmittel (100) Befestigungsvorsprünge,
b) die Halterungsmittel (122) sind Befestigungsvorsprünge und die Befestigungsmittel (100) Befestigungsöffnungen,
c) die Halterungsmittel (122) und die Befestigungsmittel (100) umfassen Befestigungsöffnungen, durch die hindurch ein Verbindungselement, insbesondere in Form einer Schraube (103), geführt ist.

9. Kontrollschacht nach Anspruch 8,
wobei auf wenigstens einer Seite
• mehrere Befestigungsöffnungen oder mehrere Befestigungsvorsprünge in Höhenrichtung (H) des Kontrollschachts (1) übereinander angeordnet sind oder
• die Befestigungsöffnung als in Höhenrichtung (H) des Kontrollschachts (1) verlaufendes Langloch ausgebildet ist oder
• im Fall der Option c) und mit Bezug auf Anspruch 6 eine Schraube (103) durch Befestigungsöffnungen in der Halterung (12) und im Befestigungsbereich (102) hindurchgeführt ist, wobei der Abstand zwischen der Halterung (12) und dem Befestigungsvorsprung (101) mithilfe der Schraube (103) eingestellt werden kann.

10. Kontrollschacht nach einem der vorhergehenden Ansprüche,
worin die Halterung (12) als Schiene oder Platte ausgebildet ist oder als Platte mit wenigstens einem zu einem Trägerbereich (124) senkrecht verlaufenden Endbereich (123), wobei der Trägerbereich (124) bevorzugt flexibel ausgebildet ist.

11. Dachaufbau (2) mit einer wasserführenden Schicht (20) und wenigstens einem Kontrollschacht (1), insbesondere Dachbegrünungsaufbau oder Verkehrsdachaufbau,
**dadurch gekennzeichnet,**
**dass** im Kontrollschacht (1) ein Wasserstandssensor (3) zum Messen des Wasserstandes in der wasserführenden Schicht (20) angeordnet ist, wobei der Kontrollschacht (1) ein Kontrollschacht nach einem der vorhergehenden Ansprüche ist.

## Claims

1. Inspection chamber (1) for a roof structure (2) having a water-bearing layer (20), comprising
a side wall (10) which laterally bounds an interior space (11) of the inspection chamber (1) that is at least partially open at the bottom,
**characterised in that**
the inspection chamber further comprises
a mount (12) arranged in the interior space (11) for a water level sensor (3) and
an adjustment device (13) which is configured to position the mount (12) such that the water level sensor (3) can be secured in a position optimised for measuring the water level in the water-bearing layer (20).

2. Inspection chamber according to claim 1,
wherein the water level sensor (3) is an ultrasonic sensor (30) and the adjustment device (13) is configured to position the mount (12) such that the sensor surface (31) of the ultrasonic sensor (30) is arranged, during operation, substantially parallel to the water surface (21) of the water-bearing layer (20).

3. Inspection chamber according to claim 1,
wherein the water level sensor (3) is a capacitive water level sensor (32) with at least one rod sensor (33) and the adjustment device (13) is configured to position the mount (12) such that, in the mounted state, the at least one rod sensor (33) is held by the mount (12) with its longitudinal direction substantially perpendicular to the water surface (21) of the water-bearing layer (20).

4. Inspection chamber according to any one of claims 1 to 3,
wherein the mount (12) is configured to be secured to an upper edge (10a) or the side wall (10) of the inspection chamber (1).

5. Inspection chamber according to claim 4,
wherein the mount (12) comprises, on at least one side (120) and preferably on two, in particular opposite, sides (120, 121), fastening means (122) with which the mount (12) can be secured to the side wall (10), and the side wall (10) has fixing means (100) complementary to the fastening means (122), wherein the mount (12) optionally comprises, on at least one side and preferably two opposite sides (120, 121), an end region (123) extending parallel to the side wall (10), wherein the end region (123) is preferably a chamfered region of a support region (124) of the mount (12) configured to fasten the water level sensor (3).

6. Inspection chamber according to claim 4,
wherein at least one fixing projection (101) with a horizontally extending fixing region (102) extends from the side wall (10) into the interior space (11).

7. Inspection chamber according to any one of claims 4 to 6,
wherein the fastening means (122) and/or the fixing means (100) are configured such that the mount (12) can be fastened on at least one of the two sides (120, 121) and preferably on both sides (120, 121) at different heights relative to the height direction of the inspection chamber (1), wherein the fastening can preferably be accomplished such that the support region (124) of the mount (12) is aligned substantially parallel to the water surface (21) of the water-bearing layer (20).

8. Inspection chamber according to any one of claims 4 to 7,
wherein the fastening means (122) and the fixing means (100) are selected from one of the following combinations:
a) the fastening means (122) are fastening openings and the fixing means (100) are fixing projections,
b) the fastening means (122) are fastening projections and the fixing means (100) are fastening openings,
c) the fastening means (122) and the fixing means (100) comprise fastening openings through which a connecting element, in particular in the form of a screw (103), is passed.

9. Inspection chamber according to claim 8,
wherein on at least one side
• several fastening openings or several fixing projections are arranged one above the other in the height direction (H) of the inspection chamber (1), or
• the fastening opening is designed as a slot extending in the height direction (H) of the inspection chamber (1), or
• in the case of option c) and with reference to claim 6, a screw (103) is passed through fastening openings in the mount (12) and in the fixing region (102), wherein the distance between the mount (12) and the fixing projection (101) can be adjusted by means of the screw (103).

10. Inspection chamber according to one of the preceding claims,
wherein the mount (12) is configured as a rail or plate, or as a plate with at least one end region (123) extending perpendicular to a support region (124), wherein the support region (124) is preferably designed to be flexible.

11. Roof structure (2) comprising a water-bearing layer (20) and at least one inspection chamber (1), in particular a green roof structure or a trafficable roof structure,
**characterised in**
**that** a water level sensor (3) for measuring the water level in the water-bearing layer (20) is arranged in the inspection chamber (1), wherein the inspection chamber (1) is an inspection chamber according to one of the preceding claims.

## Revendications

1. Regard de contrôle (1) pour une structure de toiture (2) dotée d'une couche conductrice d'eau (20), comprenant :
une paroi latérale (10) qui délimite latéralement un espace intérieur (11) du regard de contrôle (1) au moins partiellement non délimité vers le bas,
**caractérisé en ce que** le regard de contrôle comprend en outre un support (12) disposé dans l'espace intérieur (11) pour un capteur de niveau d'eau et un dispositif d'adaptation (3), le dispositif d'adaptation (3) étant conçu pour positionner le support (12) de telle sorte que le capteur de niveau d'eau (3) puisse être fixé dans une position optimisée pour une mesure du niveau d'eau dans la couche conductrice d'eau (20).

2. Regard de contrôle selon la revendication 1,
dans lequel le capteur de niveau d'eau (3) est un capteur à ultrasons (30) et le dispositif d'adaptation (13) est conçu pour positionner le support (12) de telle sorte que la surface de détection (31) du capteur à ultrasons (30) soit disposée, en fonctionnement, sensiblement parallèlement à la surface d'eau (21) de la couche conductrice d'eau (20).

3. Regard de contrôle selon la revendication 1,
dans lequel le capteur de niveau d'eau (3) est un capteur de niveau d'eau capacitif (32) comportant au moins une sonde à tige (33) et le dispositif d'adaptation (13) est conçu pour positionner le support (12) de telle sorte que, à l'état monté, ladite au moins une sonde à tige (33) soit maintenue par le support (12) avec sa direction d'extension longitudinale sensiblement perpendiculaire à la surface d'eau (21) de la couche conductrice d'eau (20).

4. Regard de contrôle selon l'une des revendications 1 à 3,
dans lequel le support (12) est conçu pour être fixé sur un bord supérieur (10a) ou sur la paroi latérale (10) du regard de contrôle (1).

5. Regard de contrôle selon la revendication 4,
dans lequel le support (12) présente, sur au moins un côté (120) et de préférence sur deux côtés notamment opposés (120, 121), des moyens de support (122) permettant de fixer le support (12) à la paroi latérale (10), et la paroi latérale (10) présente des moyens de fixation (100) complémentaires aux moyens de support (122), le support (12) présentant en option, sur au moins un côté et de préférence sur deux côtés opposés (120, 121) une zone d'extrémité (123) s'étendant parallèlement à la paroi latérale (10), la zone d'extrémité (123) étant de préférence une zone repliée d'une zone de support (124) du support (12) conçue pour la fixation du capteur de niveau d'eau (3).

6. Regard de contrôle selon la revendication 4,
dans lequel au moins une saillie de fixation (101) comportant une zone de fixation (102) s'étendant horizontalement s'étend depuis la paroi latérale (10) dans l'espace intérieur (11).

7. Regard de contrôle selon l'une des revendications 4 à 6,
dans lequel les moyens de support (122) et/ou les moyens de fixation (100) sont conçus de telle sorte que le support (12) puisse être fixé sur au moins l'un des deux côtés (120, 121) et de préférence sur les deux côtés (120, 121) à des hauteurs différentes par rapport à la direction de hauteur du regard de contrôle (1), la fixation pouvant de préférence s'effectuer de telle sorte que la zone de support (124) du support (12) soit orientée sensiblement parallèlement à la surface d'eau (21) de la couche conductrice d'eau (20).

8. Regard de contrôle selon l'une des revendications 4 à 7,
dans lequel les moyens de support (122) et les moyens de fixation (100) sont choisis parmi l'une des combinaisons suivantes :
a) les moyens de support (122) sont des ouvertures de fixation et les moyens de fixation (100) sont des saillies de fixation,
b) les moyens de support (122) sont des saillies de fixation et les moyens de fixation (100) sont des ouvertures de fixation,
c) les moyens de support (122) et les moyens de fixation (100) comprennent des ouvertures de fixation à travers lesquelles passe un élément de liaison, notamment sous la forme d'une vis (103).

9. Regard de contrôle selon la revendication 8,
dans lequel, sur au moins un côté,
• plusieurs ouvertures de fixation ou plusieurs saillies de fixation sont disposées les unes au-dessus des autres dans la direction de hauteur (H) du regard de contrôle (1) ou
• l'ouverture de fixation est réalisée sous la forme d'un trou oblong s'étendant dans la direction de hauteur (H) du regard de contrôle (1) ou
• dans le cas de l'option c) et en référence à la revendication 6, une vis (103) est passée à travers des ouvertures de fixation dans le support (12) et dans la zone de fixation (102), la distance entre le support (12) et la saillie de fixation (101) pouvant être réglée à l'aide de la vis (103).

10. Regard de contrôle selon l'une des revendications précédentes,
dans lequel le support (12) est réalisé sous forme de rail ou de plaque, ou sous forme de plaque avec au moins une zone d'extrémité (123) s'étendant perpendiculairement à une zone de support (124), la zone de support (124) étant de préférence conçue flexible.

11. Structure de toiture (2) comprenant une couche conductrice d'eau (20) et au moins un regard de contrôle (1), en particulier une structure de toiture végétalisée ou une structure de toiture circulable,
**caractérisée en ce qu'**un capteur de niveau d'eau (3) destiné à mesurer le niveau d'eau dans la couche conductrice d'eau (20) est disposé dans le regard de contrôle (1), le regard de contrôle (1) étant un regard de contrôle selon l'une des revendications précédentes.
